# EUROPEAN PATENT APPLICATION

(11) **EP 4 287 530 A1**
(43) Date of publication of application: **06.12.2023**
(21) Application number: 22176935.9
(22) Date of filing: 02.06.2022
(51) Int. Cl.: H04J 3/00

(54) **ANALYSIS OF LOCAL TIME STAMPS AND REFERENCE CLOCK IN A AT LEAST PARTLY VIRTUAL COMMUNICATION SYSTEM FOR ERROR DETECTION**

(71) Applicant: Siemens Aktiengesellschaft, 80333 München (DE)
(72) Inventor: Walewski, Joachim, 82008 Unterhaching (DE); Graf, Rene, 90513 Zirndorf (DE); Richter, Siegfried, 91207 Lauf (DE)
(74) Representative: Siemens Patent Attorneys

(57) **Abstract**

The invention discloses a communication system comprising virtualized industrial automation applications and virtualized communication network applications, whereby:
- a QoS management & control unit (2), set-up to distribute readings of a reference time base (1) to the virtualized industrial automation applications and the virtualized communication network applications at first pre-defined points in time, in order to synchronize local clocks (3) of the virtualized industrial automation applications and the virtualized communication network applications, and
- a data recording unit (6), set up to collect and store at a pre-defined second point in time:
a) the reading of a corresponding local clock (3) when a transmitted pre-defined packet is handed over from one OSI layer to another OSI layer,
b) the reading of the reference time base (1), and
c) an identification information of the transmitted packet,

- whereby the QoS management & control unit (2) is configured to determine and/or localize an error, by processing:
a) the stored at least one reading of the local clock (3),
b) the stored at least one reading of the reference time base (1), and
c) the identification information.

A related method is disclosed as well.

## Description

### FIELD OF THE DISCLOSURE

The present invention relates to a communication system comprising virtualized industrial automation applications and virtualized communication network applications. A related method is disclosed as well.

### BACKGROUND OF THE DISCLOSURE

There is a trend to move time-critical run time automation applications from field devices to edge clouds. Examples for such applications are virtualised programable logic controller (PLC) programs that use serial flow chart (SFCs). For such deployments, it is essential that the clock of the edge-cloud application reflects the actual time. Otherwise, run-time logs can become corrupted, and process errors can be triggered.

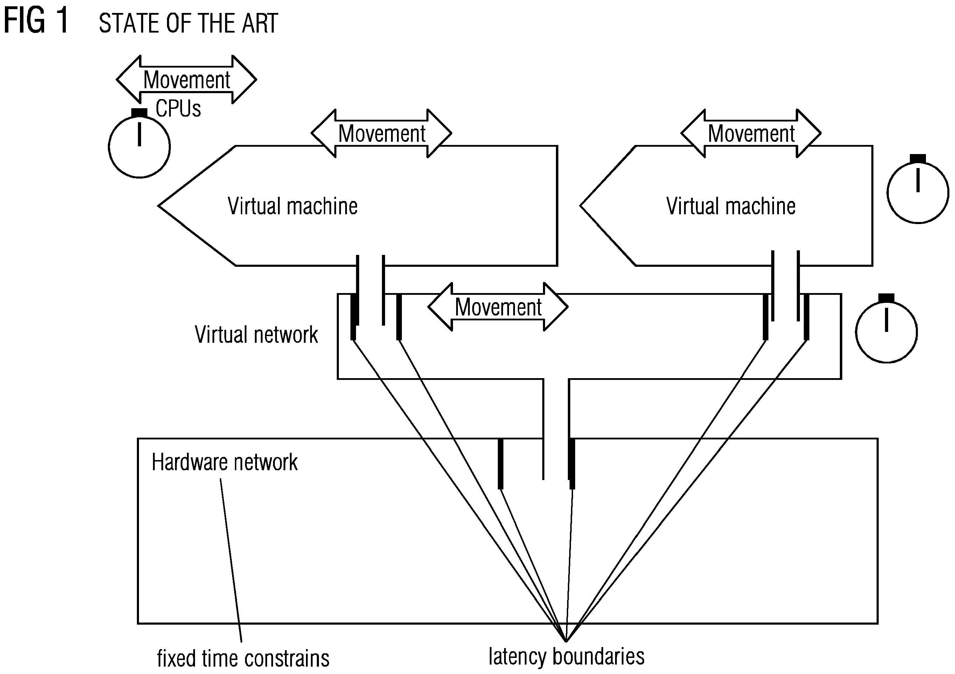

FIG. 1 illustrates such a deployment showing an edge cloud based on several CPU and a non-virtualised network ("hardware network"). The virtualisation environment hosts two virtual machines and a virtual network. The vertical extensions connecting the virtual machines with the virtual network and the virtual network with the "hardware network" symbolise "data pipes". The virtualisation environment has its own time base, and so do the virtual machines and the virtual network, symbolised by the clocks.

Important is that these time bases are not necessarily fixed among each other, rather these clocks can individually become too early or too late (shown by the arrow "movement" in FIG. 1) against a global reference time base, and so can their internal processes. As both the virtual network and the "hardware network" have time constraints (depicted as latency boundaries), this movement of the internal clocks can lead to data packets being exchanges between the virtual machines and the virtual network as well as the virtual network and the "hardware network" being prohibitively early or late; usually, being late is the bigger issue. It is noted that the "hardware network" usually is better at keeping its internal clock stable than the virtual processes in the edge cloud.

The untimeliness of the exchanged data packets can have real-world consequences, for instance a watch dog can judge a message from a virtual machine as prohibitively late, issuing an emergency stop of the associated, mechanical, synchronised production process. It is noted that externally synchronising the time base of virtual processes - as exemplified in FIG. 1 - is state of the art.

A solution should stipulate that the system in question, for instance a production automation system, is monitored during operation and supported with diagnostic data. This data can be used to find the origin of errors generated by time differences of the connected processes (e.g., application, network, access). A real-time data recorder can gather run time information from network stacks. Timing problems can arise when the automation application and the network is hosted in a virtual machine.

The automation application can run in a virtual machine that is deployed on a real-time capable edge cloud. Many of the network functions are also hosted on the virtual machine. The network functions can, for instance, be implemented by using software-defined networking technology. The difference over the "hard-wired" application and network deployment is that virtualisation makes it easy to monitor various aspects of the programs running on the virtual machine. For instance, the virtual machine itself may offer monitoring capabilities. The same is true for virtualised network functions.

Data from these monitoring functions can be fed to the real-time data recorder. This approach is hampered though by the fact that the local time of the applications in the virtual machine is not necessarily the same. For instance, the local clock in an automation application can be delayed when the CPU on which this application runs is overloaded. So, if one deploys clock functions in the edge-cloud hosted automation and network functions and if one synchronises them at a given time, these clocks will typically be unsynchronised rather sooner than later.

As described above, this can lead to unwanted erroneous behaviour of the automation system. One mitigation strategy is to continuously synchronise all clocks. However, such a measure hides the underlying structural causes behind the clock drift and stifles thus potential counter measures such as dedicating one CPU core to each of the automation applications.

One common solution to this problem is to periodically broadcast sync telegrams, in which each system logs its local time relatively to a common time basis. From this relative time, the jitter of the local system time can be inferred. A program interpreting the log data from various systems can use these sync telegrams to synchronize the individual local clocks at certain points, but not over extended periods if the local system time jitters rather rapidly. Therefore, if a serious timing problem occurs, the last sync telegram might have been received too long ago. In that case, the order of log entries in a list sourced from different systems might be wrong and lead to irreconcilable inconsistencies.

Note that these synch-telegrams usually come from only one OSI layer (typically the application layer). Thus, in mixed environments with real and virtual instances, where different OSI layers run on different systems (e.g., layer 1 and 2 on real hardware, layer 3 to 7 in virtual machine), this method will not succeed ensuring consistency, since each of these layers would refer to different local times.

With today's approaches, two issues arises. Firstly, different system times can be incommensurable. Secondly, one cannot discern at what OSI layer an error occurred.

### SUMMARY OF THE DISCLOSURE

The objective of the present invention is to provide a solution to support the detection and/or localization of errors in an at least partly virtualized communication system.

To accomplish the objective, the present invention provides a solution according to the independent claims. Advantageous embodiments are provided in the dependent claims.

According to a first aspect of the disclosure, readings of a reference time base, which isset-up remotely. The time base is distributed to automation and network applications of a communication system. Additionally, the readings of local clocks are gathered and recorded together with the reading of the base time. Typically, the focus of this monitoring task is on the virtual infrastructure.

According to a second aspect of the disclosure, the local time is recorded when a transmitted packet is handed over from one OSI layer to another. This local time-together with the reference time base and a packet identification information-is recorded in a data recording unit.

The invention claims a communication system comprising virtualized industrial automation applications and virtualized communication network applications, whereby:
- a QoS management & control unit is set up to distribute readings of a reference time base to the virtualized industrial automation applications and the virtualized communication network applications at first pre-defined points in time, in order to synchronize local clocks of the virtualized industrial automation applications and the virtualized communication network applications, and
- a data recording unit, set up to collect and store at a pre-defined second point in time:
   a) the reading of a corresponding local clock when a transmitted pre-defined packet is handed over from one OSI layer to another OSI layer,
   b) the reading of the reference time base, and
   c) an identification information of the transmitted packet,
- whereby the QoS management & control unit is configured to determine and/or localize an error, by processing:
   a) the stored at least one reading of the local clock,
   b) the stored at least one reading of the time base, and
   c) the identification information.

The communication network comprises OSI layers 1 to 7.

The determination and/or localization of an error include diagnoses of the communication system and trend analysis of communication system behavior.

The disclosure offers several advantages and benefits over the state of the art:
1. It enables run-time and even real-time timing error detection and analysis that is tailored to virtualised networks.
2. It enables locating the source of the run-time error both in terms of in what network node the error occurred and at what OSI layer.
3. Combining information from different OSI layers results in a qualitatively better diagnosis. This diagnosis-in turn-results in a quicker identification of the error cause.
4. "Rich analysis" is enabled by recording augmented data (including control data) and/or sensor data. This improves the quality of the error analysis.
5. The disclosed approach can be applied to combinations of virtual and "real" networks.
6. The disclosed approach can readily be coupled with reporting and assistance systems.

The data recording unit is further configured to collect and store at the pre-defined second point in time:
- further information, wherein the further information enables the data recording unit and/or the QoS management & control unit to discern where this layer handover took place in the communication system.

Such identification information comprises, for instance, the ID of the physical device on which the virtual process runs and the ID of the virtual network node, for instance the switch ID.

The pre-defined packet comprises user plane traffic (= network user traffic) and/or control and management traffic.

The identification information can comprise auxiliary information, such as the source IP address, the destination IP address, and the requested and negotiated QoS (including the requested application-to-application latency). The latter enables the inference on when a packet needs to arrive at its layer-seven destination. If one is interested in real-time error analysis, the auxiliary information is typically not encrypted.

The details of the further information can be configured individually for each OSI layer and also for each (network) node.

In a further embodiment of the communication system the data recording unit is configured to store data in a ring buffer.

This approach enables the continuous recording of diagnostic information.

In a further embodiment of the communication system the data recording unit is configured to freeze the recording of data at a pre-defined third point in time, wherein stored data is divided into data which pertains to events before a second point in time and data which pertains to the period after the second point in time.

In a further embodiment of the communication system, the second point in time is triggerable by an OSI layer or by an external command.

The trigger sources are in the OSI layers in the network nodes. Trigger conditions can be set via control commands. The recorded data can be used for diagnosis, error detection, and trend analysis. An example is that an error is triggered when time (packet crosses OSI layer along communication path) > time (packet sent at layer-seven at source application) + requested end-to-end latency.

An example for a trend is when the latency increases continuously or when the load of the CPU on which a virtualised network function runs increases continuously.

In a further embodiment of the communication system, the QoS management & control unit is configured to determine and/or localize an error, by processing device information and/or device data from at least one external device.

For instance, once a trigger is received from an OSI layer, a radio channel analyser is activated and recorded. Optionally, also the stream of a surround camera is recorded.

In a further embodiment of the communication system, the data recording unit is configured to continuously record the external information and/or the external data from the external device.

In a further embodiment of the communication system, the second point in time is a time point when an expected message has not arrived at a destination application.

This can, for instance, be based on the expected arrival time for periodic traffic or on the application counter in the pay load or the network header.

In a further embodiment of the communication system, the QoS management & control unit is configured to report a timing violation (= determined error) to a source application and/or a destination application causing the timing violation.

The invention further claims an automated method for operation of a communication system, wherein the communication system comprises virtualized industrial automation applications and virtualized communication network applications, comprising the steps:
- distributing readings of a reference time base to the virtualized industrial automation applications and the virtualized communication network applications at first pre-defined points in time, in order to synchronize local clocks of the virtualized industrial automation applications and the virtualized communication network applications,
- collecting and recording at a pre-defined second point in time:
   i) the reading of a corresponding local clock when a transmitted pre-defined packet is handed over from one OSI layer to another OSI layer,
   ii) the reading of the reference time base, and
   iii) an identification information of the transmitted packet, and
- determining and/or localizing an error, by processing:
   i) the stored at least one reading of the local clock,
   ii) the stored at least one reading of the time base, and
   iii) the identification information.

In a further embodiment, the method comprises:
collecting and storing at a pre-defined second point in time further information, wherein the further information enables data recording and/or the QoS management & control unit to discern where this layer handover took place in the communication system.

In a further embodiment of the method the recording of data is frozen at a pre-defined third point in time, wherein stored data is divided into data which pertains to events before the second point in time and data which pertains to the period after the second point in time.

In a further embodiment of the method, the second point in time is triggered by an OSI layer or by an external command.

In a further embodiment of the method determination and/or localization of the error is performed by processing device information and/or device data from at least one external device.

In a further embodiment of the method the external information and/or the external data from the external device is continuously recorded.

In a further embodiment of the method the second point in time is a time point when an expected message has not arrived at a destination application.

Further benefits and advantages of the present invention will become apparent after a careful reading of the detailed description with appropriate reference to the accompanying drawings.

### BRIEF DESCRIPTION OF THE DRAWINGS

- FIG. 1: shows an illustration of a communication system comprising virtualized units according to state of the art,
- FIG. 2: shows a block diagram of an edge-cloud deployment of a communication and automation system,
- FIG. 3: shows a block diagram of a communication and automation system,
- FIG. 4: shows a further block diagram of a communication and automation system, and
- FIG. 5: shows a further block diagram of a communication and automation system.

### DETAILED DESCRIPTION OF THE DISCLOSURE

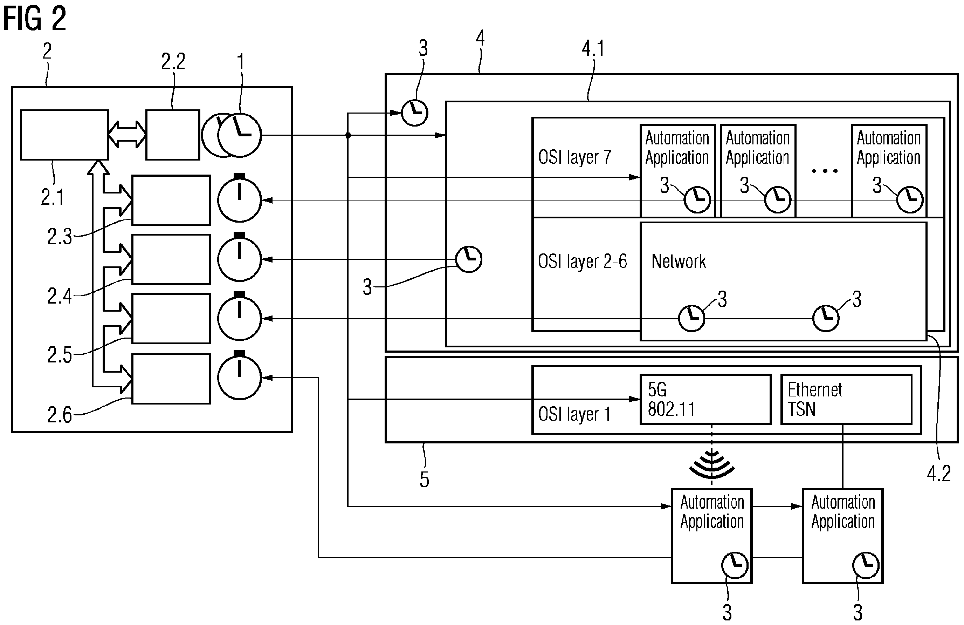

FIG. 2 shows a block diagram of an edge-cloud 4 deployment of a communication and automation system (= communication system). The edge-cloud 4 comprises a virtual machine 4.1 which comprises the functions according to the layers 2 to 7 of OSI model. Furthermore, the virtual machine 4.1 comprises the virtual network 4.2 and a virtual network 4.2. The communication hardware 5 is part of the system as well. The system further comprises a QoS management & control unit 2 which comprises a QoS management dashboard 2.1. The QoS management & control unit 2 is responsible for time base monitoring 2.2, virtual application QoS monitoring 2.3, virtual machine monitoring & management 2.4, network monitoring & management 2.5, and application QoS monitoring.

A reference time base 1 of the QoS management & control unit 2 is distributed to the automation and network applications of the edge cloud 4 and the communication hardware 5.

Additionally, the readings of the local clocks 3 of the automation and network applications are gathered and recorded together with the reading of the actual reference time base 1.

An alarm can be triggered if the deviation of the local clocks for connected and time-related tasks or processes exceeds a per-set time boundary. This alarm can be used, for instance, for protecting mechanical machines against damages that are caused by the time mismatch in the applications and the network.

Furthermore, the reference time base 1 is implemented as a redundant clock. When a discrepancy between the primary and secondary time bases occurs, this occurrence is relayed to the QoS management dashboard and/or recorded.

Furthermore, the QoS management & control unit 2 offers the configuration and execution of clock-related alarms. An example is that an alarm is triggered when the local clocks of the automation applications in the virtual machine systematically diverge faster from each other more than a given speed.

Furthermore, discrepancy patterns are used for deciding whether an error alarm is issued. For instance, the comparison function can look for systematic trends of the clock discrepancies (accumulation of changes in one direction in the automation application clocks and the opposite trend in the virtualised network, etc.).

Furthermore, the monitoring granularity can be made finer (for instance, de-creasing the time between two recordings by half).

Furthermore, the granularity of the monitoring can be made finer after an alarm.

Furthermore, a timer can be set that defines how long monitoring at a finer granularity takes place.

Furthermore, time stamps from OSI layer 1 can also be collected by the QoS management & control unit 2 (not shown in FIG. 2).

Furthermore, the local clocks can be synchronised with the reference time base. It is noted that time synchronisation protocols such as IEEE 1588 can be used.

Furthermore, the status of processes in the edge cloud 4 can be stored together with time stamps. An example for such a status is the utilisation of the CPUs in the edge cloud 4.

Furthermore, the real time packets between the virtualized and the external hardware can be recorded for diagnostic purposes (network control data and the related user plane content).

Furthermore, the data recording can work like a flight recorder (endless loop).

Furthermore, the recorded content can be frozen if an alarm is issued by the QoS management & control unit 2.

Furthermore, a fast alarm trigger can be generated for freezing the flight recording of selected time-related processes. The alarm can be triggered by any virtual process or a combination of any of these processes. Example: communication time out. The alarm can also be triggered by the external monitoring system 2.

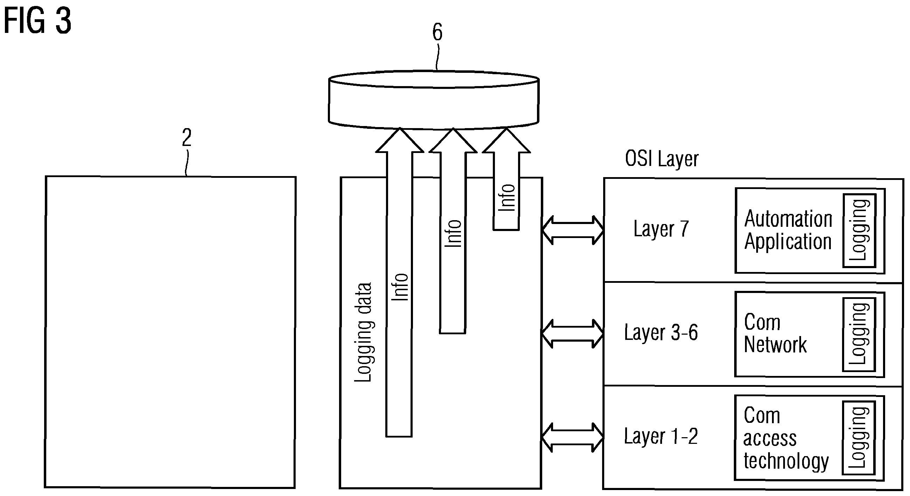

The concept of the disclosed solution is shown in FIG. 3. Monitoring data is collected from the various OSI layers and is recorded by a data recording unit 6 and analysed by the QoS management & control unit 2. The collected data includes the local time (details shown in FIG. 2).

The first aspect is fulfilled according to the above-described solution since all local clocks are always recorded together with the reference clock. The solution for the second aspect discloses how the reference time base can be used for addressing issues, namely root cause analysis, at different OSI layers of the communication system. The prime focus hereby lies on packets that are processed in the edge cloud and that also pass through the virtual network in the edge cloud.

The core idea of the second aspect is to record the time when a transmitted packet is handed over from one OSI layer to another and to record this local time together with the reference time base in the data recorder. The recording of the latter time is tacitly assumed henceforth.

Furthermore, the time stamp can be augmented with further information which enables the data recorder to discern where this layer handover took place. Such further information includes, for instance, the ID of the physical device on which the virtual process runs and the ID of the virtual network node, for instance the switch ID.

In a further embodiment, not only user plane traffic (= network user traffic), but also control and management traffic is recorded.

In a further embodiment, the time stamp is augmented with auxiliary information such as the source MAC address, the destination MAC address, and the requested and negotiated QoS (including the requested application-to-application latency). The latter enables the inference on when a packet needs to arrive at its layer-seven destination. If one is interested in real-time error analysis, the auxiliary information is typically not encrypted.

In a further embodiment, the details of the auxiliary information augmentation can be configured individually for each OSI layer and also for each (network) node.

In a further embodiment, the data recording unit 6 stores data in a ring buffer. This approach enables the continuous recording of diagnostic information.

In a further embodiment the recording in the ring buffer can be frozen on demand. Once the recording is frozen, the captured data can be divided into data which pertains to events before an event of interest (for instance, dropped packets) and data which pertains to the period after the event.

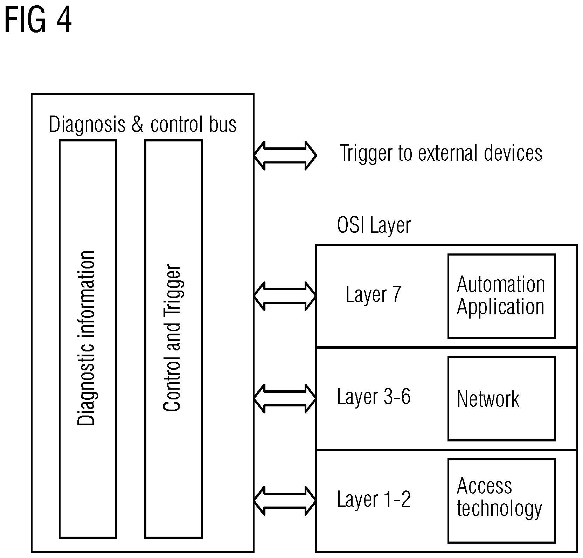

In a further embodiment, the data recording unit 6 (or any other suitable function) conducts a root cause analysis. For this, the recoding can either be triggered at an OSI layer or by external commands (see FIG. 4). The trigger sources are in the OSI layers in the network nodes. Trigger conditions can be set via control commands. The recorded data can be used for diagnosis, error detection, and trend analysis. An example is that an error is triggered when time (packet crosses OSI layer along communication path) > time(packet sent at layer-seven at source application) + requested end-to-end latency

An example for a trend is when the latency increases continuously or when the load of the CPU on which a virtualised network node runs increases continuously.

In a further embodiment, the root cause analysis (= error detection) can be implemented layer-wise. For instance, for a network node X along the communication path, this test is first conducted at the OSI layer from which the error trigger originated (three), then at the layer below, and so on, until one arrives at layer one. The test can also be conducted at the same OSI layer of all nodes along the communication path. Note that the software that carries out this analysis is not shown in FIG. 4. In practice, it can be part of the data recorder, or it can be hosted on an external platform, for instance a cloud.

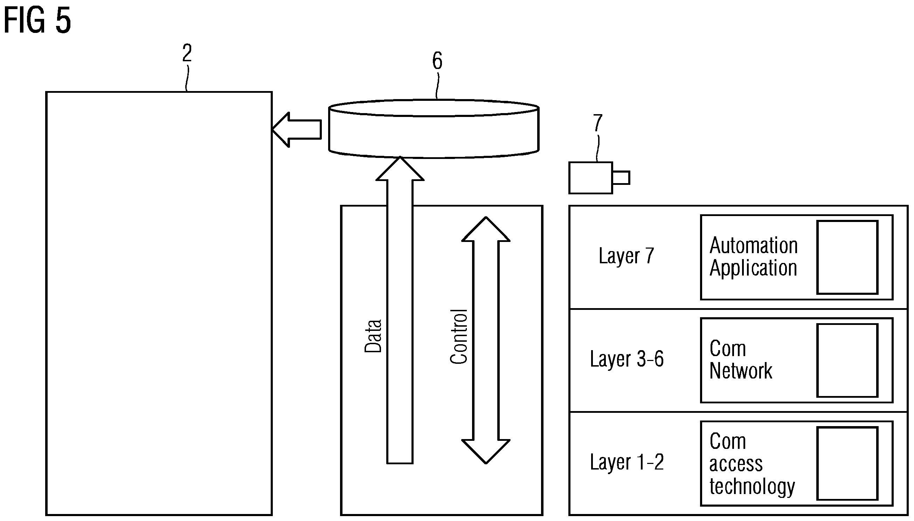

In a further embodiment, information from external devices 7 can be integrated in the diagnostic process (see FIG. 5) and therefor be recorded by the data recording unit 6 and analysed by the QOS management & control unit 2. For instance, once a trigger is received from an OSI layer, a radio channel analyser is activated and recorded.

Optionally, also the stream of a surround camera is recorded. The chain of causality can also be reversed. For instance, a surveillance camera observes a big AGV approaching the automation application and sends a trigger to the real-time data recorder. After this, recording commands are sent from the data recorder to the OSI layers.

In a further embodiment, data from external sensors (channel analyser, surround video ...) are continuously captured by the ring buffer.

Optionally, no triggers are used. Instead, the recorded data is continuously stored in an external memory. This approach lends itself for compliance testing, deployment quality control, and detection and analysis of infrequent errors.

In a further embodiment, the error analysis is triggered when an expected message has not arrived at the destination application. This can, for instance, be based on the expected arrival time for periodic traffic or on the application counter in the pay load or the network header.

In a further embodiment, detected timing violations are reported back to the source application and/or the destination application. This information can, for instance, be used by a controller for adjusting its control parameters.

In a further embodiment, an algorithm which is analysing the time-related data recorder data can distil this information in different ways: it can, for instance, prepare detailed technical reports for specialists, or it can propose actions feasible for a non-expert (exact lo-cation of the node, a picture of the node, step-by-step procedures, a list of needed tools to open the node, etc.).

Although the invention has been explained in relation to its preferred embodiments as mentioned above, it is to be understood that many other possible modifications and variations can be made without departing from the scope of the present invention. It is, therefore, contemplated that the appended claim or claims will cover such modifications and variations that fall within the true scope of the invention.

### LIST OF REFERENCE SIGNS

- 1: Reference time base
- 2: QoS management & control unit
- 2.1: QoS management dashboard
- 2.2: Time base monitoring
- 2.3: Virtual application QoS monitoring
- 2.4: Virtual machine monitoring & management
- 2.5: Network machine monitoring & management
- 2.6: Application monitoring
- 3: Local clock
- 4: Edge cloud
- 4.1: Virtual machine
- 4.2: Virtual network
- 5: Communication hardware
- 6: Data recording unit
- 7: External device

## Claims

1. A communication system comprising virtualized industrial automation applications and virtualized communication network applications, **characterized by**:
- a QoS management & control unit (2), set up to distribute readings of a reference time base (1) to the virtualized industrial automation applications and the virtualized communication network applications at first pre-defined points in time, in order to synchronize local clocks (3) of the virtualized industrial automation applications and the virtualized communication network applications, and
- a data recording unit (6), set up to collect and store at a pre-defined second point in time:
a) the reading of a corresponding local clock (3) when a transmitted pre-defined packet is handed over from one OSI layer to another OSI layer,
b) the reading of the reference time base (1), and
c) an identification information of the transmitted packet,
- whereby the QoS management & control unit (2) is configured to determine and/or localize an error, by processing:
a) the stored at least one reading of the local clock (3),
b) the stored at least one reading of the reference time base (1), and
c) the identification information.

2. The communication system according to claim 1, whereby the data recording unit (6) is further configured to collect and store at the pre-defined second point in time:
- further information, wherein the further information enables the data recording unit (6) and/or the QoS management & control unit (2) to discern where a layer handover took place in the communication system.

3. The communication system according to claim 1 or 2, whereby
the data recording unit (6) is configured to store data in a ring buffer.

4. The communication system according to one of the claims 1 to 3, whereby
the data recording unit (6) is configured to freeze the recording of data at a pre-defined third point in time, wherein stored data is divided into data which pertains to events before the second point in time and data which pertains to the period after the second point in time.

5. The communication system according to one of the previous claims, whereby
the second point in time is triggerable by an OSI layer or by an external command.

6. The communication system according to one of the previous claims, whereby
the QoS management & control unit (2) is configured to determine and/or localize an error, by processing device information and/or device data from at least one external device (7).

7. The communication system according to claim 6, whereby the data recording unit (6) is configured to continuously record the external information and/or the external data from the external device (7).

8. The communication system according to one of the previous claims, whereby
the second point in time is a time point when an expected message has not arrived at a destination application.

9. The communication system according to one of the previous claims, whereby
the QoS management & control unit (2) is configured, to report a timing violation, determined by the error determination, to a source application and/or a destination application causing the timing violation.

10. An automated method for operation a communication system, wherein the communication system comprises virtualized industrial automation applications and virtualized communication network applications, **characterized by** the steps:
- distributing readings of a reference time base (1) to the virtualized industrial automation applications and the virtualized communication network applications at first pre-defined points in time, in order to synchronize local clocks (3) of the virtualized industrial automation applications and the virtualized communication network applications,
- collecting and recording at a pre-defined second point in time:
i) the reading of a corresponding local clock (3) when a transmitted pre-defined packet is handed over from one OSI layer to another OSI layer,
ii) the reading of the reference time base (1), and
iii) an identification information of the transmitted packet, and
- determining and/or localizing an error, by processing:
i) the stored at least one reading of the local clock (3),
ii) the stored at least one reading of the reference time base (1), and
iii) the identification information.

11. The method according to claim 10, comprising:
collecting and storing at the pre-defined second point in time further information, wherein the further information enables to discern where the layer handover took place in the communication system.

12. The method according to claim 10 or 11, whereby
the recording of data is frozen at a pre-defined third point in time, wherein stored data is divided into data which pertains to events before the second point in time and data which pertains to the period after the second point in time.

13. The method according to one of the claims 10 to 12, whereby
the second point in time is triggered by an OSI layer or by an external command.

14. The method according to one of the claims 10 to 13, whereby
determination and/or localization of the error is performed by processing device information and/or device data from at least one external device (7).

15. The method according to claim 14, whereby
the external information and/or the external data from the external device (7) is continuously recorded.

16. The method according to one of the claims 10 to 15, whereby
the second point in time is a time point when an expected message has not arrived at a destination application.
